(19) Europäisches Patentamt / European Patent Office / Office européen des brevets

(11) **EP 3 737 971 B1**

(12) **EUROPEAN PATENT SPECIFICATION**

(45) Date of publication and mention of the grant of the patent:
**28.09.2022 Bulletin 2022/39**

(21) Application number: **19703184.2**

(22) Date of filing: **07.01.2019**

(51) International Patent Classification (IPC):
**G01T 1/04** (2006.01)

(52) Cooperative Patent Classification (CPC):
**G01T 1/04**

(86) International application number:
**PCT/IB2019/050098**

(87) International publication number:
**WO 2019/138309 (18.07.2019 Gazette 2019/29)**

(54) **METHOD AND SYSTEM FOR REAL-TIME DETERMINATION OF CHARACTERISTICS OF RADIO-CHROMIC FILMS**

VERFAHREN UND SYSTEM ZUR ECHTZEITBESTIMMUNG VON EIGENSCHAFTEN VON RADIOCHROMEN FILMEN

PROCÉDÉ ET SYSTÈME DE DÉTERMINATION EN TEMPS RÉEL DE CARACTÉRISTIQUES DE FILMS RADIO-CHROMIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.01.2018 IT 201800000652**

(43) Date of publication of application:
**18.11.2020 Bulletin 2020/47**

(73) Proprietor: **Istituto Nazionale di Fisica Nucleare 00044 Frascati (RM) (IT)**

(72) Inventors:
- **BUONTEMPO, Salvatore**
  **00044 Frascati (Roma) (IT)**
- **CAMPAJOLA, Luigi**
  **00044 Frascati (Roma) (IT)**
- **CASOLARO, Pierluigi**
  **00044 Frascati (Roma) (IT)**
- **BREGLIO, Giovanni**
  **00044 Frascati (Roma) (IT)**
- **FIENGA, Francesco**
  **00044 Frascati (Roma) (IT)**
- **DI CAPUA, Francesco**
  **00044 Frascati (Roma) (IT)**
- **CUTOLO, Antonello**
  **80075 Forio (NA) (IT)**
- **CUSANO, Andrea**
  **81100 Caserta (IT)**
- **CONSALES, Marco**
  **82100 Benevento (IT)**
- **VAIANO, Patrizio**
  **80041 Boscoreale (NA) (IT)**

(74) Representative: **Borsano, Corrado et al Metroconsult S.r.l. Foro Buonaparte, 51 20121 Milano (IT)**

(56) References cited:
- **CROTEAU ANDRÉ ET AL: "Real-time optical fiber dosimeter probe", OPTICAL FIBERS, SENSORS, AND DEVICES FOR BIOMEDICAL DIAGNOSTICS AND TREATMENT XI, SPIE, 1000 20TH ST. BELLINGHAM WA 98225-6705 USA, vol. 7894, no. 1, 10 February 2011 (2011-02-10), pages 1-7, XP060006929, DOI: 10.1117/12.873619**
- **CARON SERGE ET AL: "Selecting the appropriate splitter for a reflective optical fiber dosimeter probe", SPIE, 1000 20TH ST. BELLINGHAM WA 98225-6705 USA, vol. 8412, October 2012 (2012-10), pages 84120D-84120D, XP060026753, DOI: 10.1117/12.2001179 ISBN: 978-0-8194-9090-2**

## Description

Field of application of the invention

The present invention relates to a method and a system for real-time determination of characteristics of radio-chromic films.

State of the art

For determining characteristics of radio-chromic films, methods are known in the art which are based on reading actions that are carried out only before and after exposure to ionizing radiations through commercial scanners that determine their blackening level following said exposure. The film manufacturer provides a blackening level-radiation dose calibration curve.

The fact that the reading occurs only before and after film exposure does not allow knowing the curve of the radiation dose accumulated over time, but only the integral of the dose accumulated by the film at the end of the exposure. In practice, if the film is exposed to radiation for one day and is then found to be saturated, i.e. blackened to such an extent that the effect produced by further exposure could not be discerned, it will be impossible to know whether saturation occurred after one minute of exposure or gradually during the one-day exposure. Moreover, said known method requires the use of a film surface having such dimensions as to allow reading by means of a scanner (usually at least 1 $cm^2$), and requires access to the irradiation site before and after irradiation. Post-irradiation access is often limited by the possible level of activation of the area, and it is therefore necessary to wait before being able to access and pick up the film.

CROTEAU ANDRE ET AL: "Real-time optical fiber dosimeter probe",OPTICAL FIBERS, SENSORS, AND DEVICES FOR BIOMEDICAL DIAGNOSTICS AND TREATMENT XI, SPIE, 1000 20TH ST. BELLINGHAM WA 98225-6705 USA, vol. 7894, no. 1, 10 February 2011 (2011-02-10), pages 1-7 discloses a system for real-time determination of characteristics of radio-chromic films.

Thus, a need arises for new technical solutions simplifying the above-mentioned procedures, while also making the system usable in real time using simple and low-cost equipment.

Summary of the invention

It is the object of the present invention to propose a method and a system for real-time determination of characteristics of radio-chromic films, which can overcome all of the above-mentioned drawbacks.

The present invention relates to a method and a system for real-time determination of characteristics of radio-chromic films, which is based on optical-fiber technology and allows determining the characteristics through real-time reading and from a remote location.

According to the invention, the radio-chromic film is illuminated during the exposure to ionizing radiations, and the change in colour of the film, due to the accumulated dose of radiation, is read during the exposure to such radiation. Illumination and reading of the radio-chromic film are both carried out by light transfer via optical fibers. One or more optical fibers act as a film illuminator, and one or more other optical fibers act as reader of the light backscattered by the film itself or by suitable materials, as will be described hereinafter. During the exposure to ionizing radiations, the optical characteristics of the film change (in particular, the film becomes darker) and, as a consequence, the light reading fibers will collect an altered (typically weaker) signal. By measuring the return light signal in real time during the exposure, it is possible to determine the variation that has occurred in the optical properties of the film, and hence the absorbed dose of ionizing radiations.

Since the fibers have micrometric dimensions (e.g. 150-200 microns), the size of the radio-chromic film required for the measurement is very small, resulting in very low costs incurred for radio-chromic material compared to prior-art systems.

The present invention relates to a system for real-time determination of characteristics of radio-chromic films according to claim 1.

The present invention also relates to a method for real-time determination of characteristics of radio-chromic films according to claim 6.

It is a particular object of the present invention to provide a method and a system for real-time determination of characteristics of radio-chromic films as set out in the claims, which are an integral part of the present description.

Brief description of the drawings

Further objects and advantages of the present invention will become apparent from the following detailed description of a preferred embodiment (and variants) thereof referring to the annexed drawings, which are only supplied by way of non-limiting example, wherein:

Figure 1 shows a schematic example of an embodiment of the system of the invention;
Figures 2 to 8 show graphs relating to measurements obtained by using the system of the invention;
Figure 9 shows an example of an embodiment of the backscattering system;Fig. 10 shows the backscattering system used in the system according to the invention.

In the drawings, the same reference numerals and letters identify the same items or components.

Detailed description of some embodiments

As aforesaid, the present invention relates to a method and a system for real-time determination of characteristics of radio-chromic films, which is based on optical-fiber technology and allows determining the characteristics through real-time reading and from a remote location.

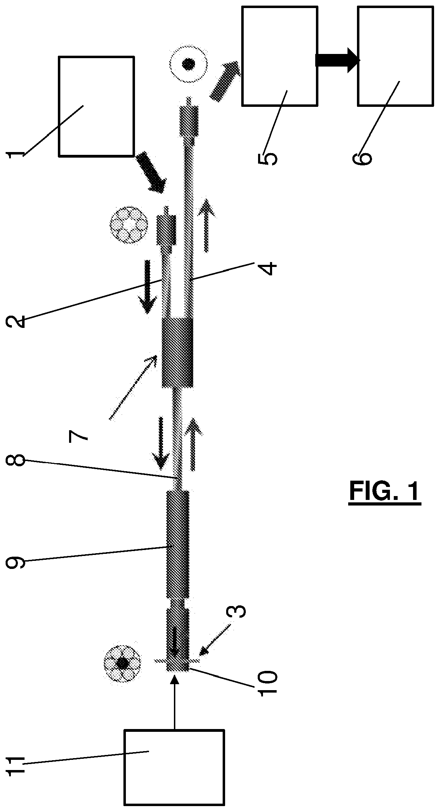

Figure 1 shows a schematic example of embodiment of the system used for reading in real time, from a remote location, a radio-chromic film.

In this context, the radio-chromic films in use are as defined above and as described, for example, in the article by Slobodan Devic et al. entitled: "Reference radio-chromic film dosimetry: Review of technical aspects", Elsevier Ltd., Physica Medica 32 (2016), pages 541-556. These are radio-chromic films sensitive to ionizing radiations, of the single-layer or double-layer type, made from microcrystalline organic monomers on a fine polyester base with transparent or opaque coating.

Upon interaction with ionizing radiations, these films change their chromatic characteristics, in particular as a function of the accumulated doses of radiation and of the time distributions thereof. The usable wavelengths are those declared by the material manufacturer, at which wavelengths the film is subject to modification of its optical behaviours according to the doses of incident radiations.

In particular, the following known types of radio-chromic films may be used, without however being limited thereto:

- Gafchromic® EBT3, having a 28pm active layer between two $125\mu m$ polyester layers.
- Gafchromic® XR (-QA2, -CT2, -M2 and -RV3) and RT-QA2 opaque-base films. These are formed by four layers of materials: $97\mu m$ polyester, $20\mu m$ adhesive layer, $17\mu m$ active layer and $97\mu m$ white polyester.
- Gafchromic® MD-V3 films, having the same structure as EBT3 films, with the difference that the active layer is $10\mu m$ thick.
- Gafchromic® HD-V2 films, with a $8\mu m$ active layer on a $97\mu m$ polyester substrate.

Each one of these films has a specific dosimetric target depending on the thickness of the active layers.

An optical source 1 allows introducing light (optical signal) into one or more transmission optical fibers 2, so as to illuminate the exposed surface of a sample of radio-chromic film 3.

The light transmitted by the film 3 strikes a suitably selected scattering material. The type of material will be discussed later on in this text. The backscattered light component (optical signal) is collected into one or more collection optical fibers 4, which then send said light to a measuring system 5, in turn sending the measured data to an electronic processing system 6, e.g. a personal computer of a known type.

Preferably, the transmission and collection optical fibers are made of glass, even though optical fibers made of other known materials may be used as well. Glass ensures better resistance to radiations, and therefore ensures that the optical variations in the collected signal will be only due to alterations of the radio-chromic films under examination, and not to other alterations of the system caused by incident ionizing radiations.

In a particular, but non-limiting, embodiment of the system described herein, an optical coupler 7 of a *per se* known type allows coupling the transmission optical fibers 2 to the collection ones 4 in an optical cable 8 provided with a suitable sheath or another type of coating 9, even a rigid one, of a known type.

The light source 1 must be able to emit light in the wavelength range compatible with the specifications of the radio-chromic film in use supplied by the manufacturer, within the wavelength range of 400 to 1,100 nm.

The measurement system 5 is a device capable of converting the input light into an electric signal (in one possible, but non-limiting embodiment, it may be a spectrometer), ensuring detection within the wavelength range compatible with the specifications of the radio-chromic film in use supplied by the manufacturer, within the above-defined wavelength range.

In some possible variants, the illumination and measurement system may be simplified, e.g. by using illumination LEDs and collection and measurement photodiodes, depending on the desired level of precision and accuracy, and also as a function of the wavelengths required for the measurement, which essentially depend on the type of radio-chromic film, e.g. within the above-defined wavelength range.

An open end of the optical cable 8 ends into an optical backscattering/reflection system 10, which will be described below, which is also adapted to house the radio-chromic film 3 under examination, so that the ends of the transmission and collection fibers will be facing towards the film.

The ionizing radiation, e.g. generated by a radioactive source 11, strikes the radio-chromic film on the side of the backscattering/ reflection system 10, i.e. the ionizing radiation hits the film 3 through the backscattering/ reflection system 10. For some types of radiation sources, e.g. for extended radiation fields, the direction of incidence of the ionizing radiation does not affect the measurement. In this case, it is sufficient that the whole experimental setup is contained within the area involved in the radiation field.

Interaction with the radiations alters the optical properties of the film and blackens it gradually over time. The optical-fiber measurement system can measure said alteration in real time.

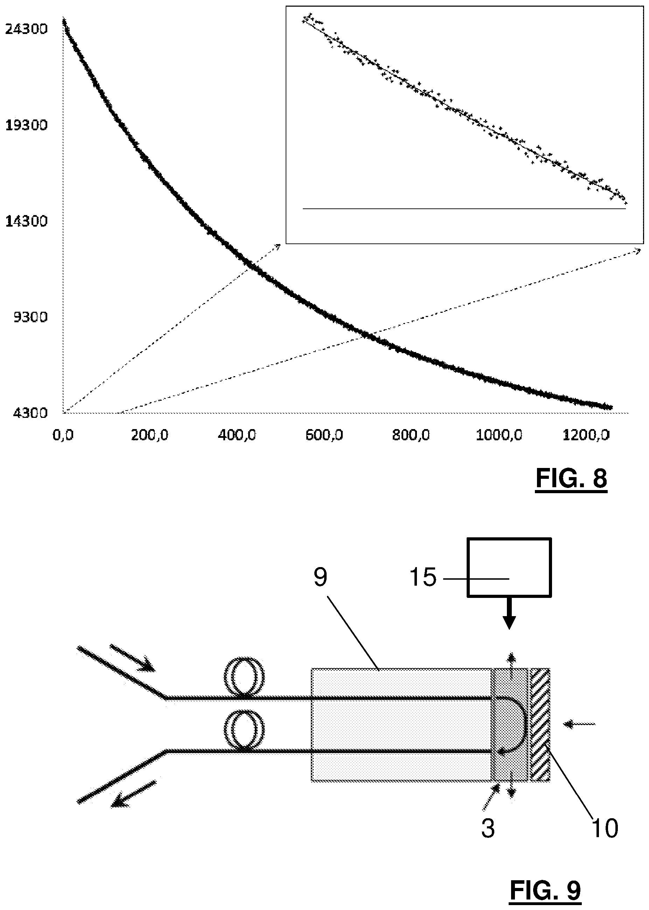

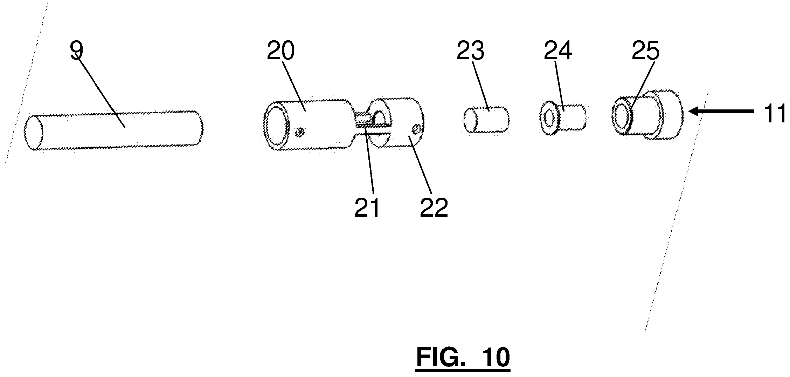

Z Figure 9 shows a particular example of an embodiment of the backscattering/reflection system 10. Figure 10 shows the backscattering / reflection system used in the system according to the invention.

In Fig. 9, the terminal part of the sheath 9 containing the illumination fibers 2 and the collection fibers 4 faces towards the backscattering/reflection system 10, which comprises also a slot in which the film 3 can be positioned and slide.

In Fig. 10, in one exemplary embodiment, a perforated cylindrical structure comprises a first part 20, which houses the terminal part of the sheath 9, followed by a slot 21 adapted to house the radio-chromic film, such that it can be slidably positioned therein, in turn followed by a second part 22 adapted to house a scattering material 23 (optional and described below), a housing 24 for thin sheets (optional and described below), and a closing terminal part 25 that connects to the part 22, e.g. by screwing or pressure. The centrally perforated structure allows the ionizing radiation 11 to enter and hit the film 3 housed in the slot 21, on the side opposite to that whereon the optical signal arrives.

In one possible variant, a system 15 may be added, which could be implemented in a *per* se known manner, in order to control and automatize the sliding of the film within the slot 21.

In one possible, but non-limiting, exemplary embodiment, shown in schematic form in Fig. 1, a number of transmission optical fibers 10 are arranged in a circular-crown fashion along the contour of the bundle that makes up the optical cable 8, while a collection optical fiber 4 is arranged at the center of the bundle. It is of course possible to create bundles with a different number of transmission and collection optical fibers, arranged differently than shown in Fig. 1, also as a function of the size of the backscattering system 10 to be implemented.

As aforesaid, the terminal part that houses the film also allows implementing the function of backscattering/reflecting the light (optical signal) towards the collection fibers.

*De facto,* this function may be performed by the film itself and/or through an additional scattering/reflecting element, designated by way of example as 23 in Fig. 10.

Some types of radio-chromic films are provided with a support that may itself act as a scatterer (with one layer on one side only of the film, or a double layer on both sides and the film at the center). In such a case, backscattering can be effected by the film itself and/or by the scatterer at the back.

The selection of the backscattering material affects the integration time of the measurement instrument and the stability of the optical signal produced. In general, the addition of the backscattering element 23 allows for a shorter integration time.

Depending on the characteristics of the radiation field to be investigated and on the particular dosimetric application, the choice of the scattering element is of crucial importance.

Several different materials may be used for this element: plastic sheets, e.g. made of ABS or Teflon, having a thickness of the order of one millimeter and/or aluminized Mylar sheets having a thickness of a few micrometers. Thick plastic materials allow obtaining a stable signal and an integration time of a few fractions of a second, whereas aluminized Mylar results in less stable signals and shorter integration times, in particular of the order of a few tens of milliseconds.

Signal stability affects the evaluation of the measurement error when reading the radiation doses.

For the purpose of measuring unknown radiation doses, it is necessary to calibrate the films by means of radiation fields known *a priori.* In particular, a set of films are exposed to a known radiation dose in order to establish a relationship between the degree of blackening of the film and the dose value. The following will discuss the most efficient spectrum analysis techniques. In this case as well, the choice of a particular analytical method for film calibration will depend on the radiation field to be investigated, in particular on the range of radiation doses.

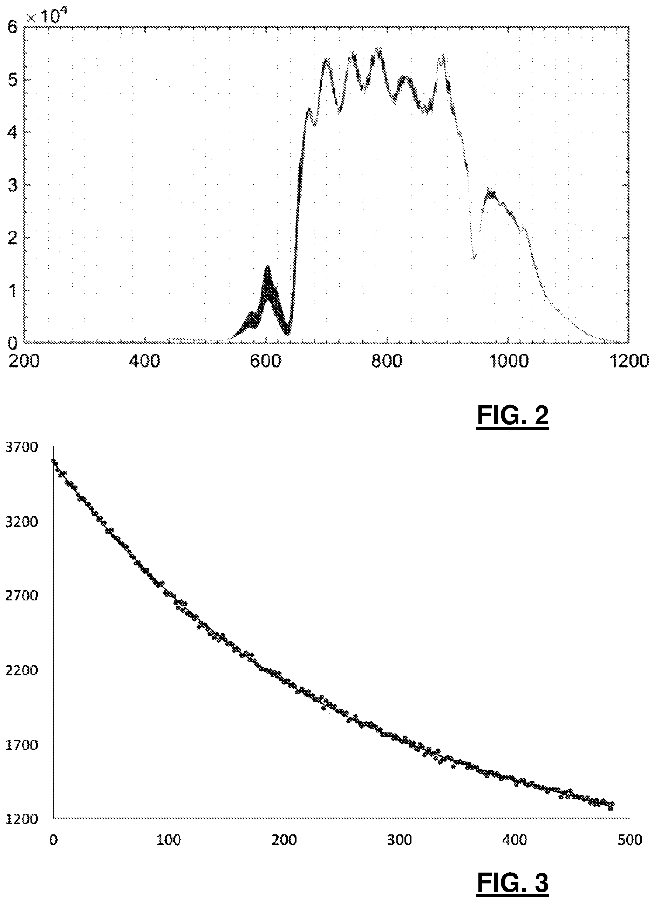

Figure 2 shows the output curves of the measurement instrument concerning the irradiation of a radio-chromic film (Gafchromic® XR-QA2) exposed to beta radiation coming from a source of $^{90}$Sr/$^{90}$Y. The X-axis indicates the optical wavelength in nm, and the Y-axis indicates the light intensity collected by the measurement system 5, expressed in counts determined downstream of an analog-to-digital conversion. The dose rate in the position of the film is 57 mGy/min. The curves, acquired every 500 milliseconds (set integration time), represent therefore the time trend of the blackening of the film caused by the beta radiation.

It can be observed that the zone of highest sensitivity, i.e. the one where there is the greatest variation in the intensity of the spectra, is contained within the [500-650 nm] wavelength range. In particular, around the 635nm wavelength the spectra show the highest sensitivity.

Therefore, by recording the counts corresponding to the 635nm wavelength, the calibration graph shown in Figure 3 is obtained, which shows the calibration trends derived from an evaluation of the counts (on the Y-axis) at the 635nm wavelength. The integration time was set to 500 ms. The X-axis indicates the dose in mGy. The polynomial curve represents the best fitting of the experimental data.

Another method of analysis that can be adopted for effecting calibration provides for evaluating the absorbance area within a specific wavelength range. From the wavelength spectrum the relative absorbance spectrum $A_{10}(\lambda)$ is then calculated, which is defined as follows:

$$A_{10}(\lambda) = \log_{10}\left[\frac{ref(\lambda)}{sample(\lambda)}\right]$$

where *ref(A)* is the light intensity (at a given wavelength $\lambda$) relating to the spectrum of the non-irradiated radio-chromic film, and *sample (A)* is the light intensity relating to the spectrum of the irradiated radio-chromic film. The integral (absorbance area) extended to a predefined wavelength range is then calculated.

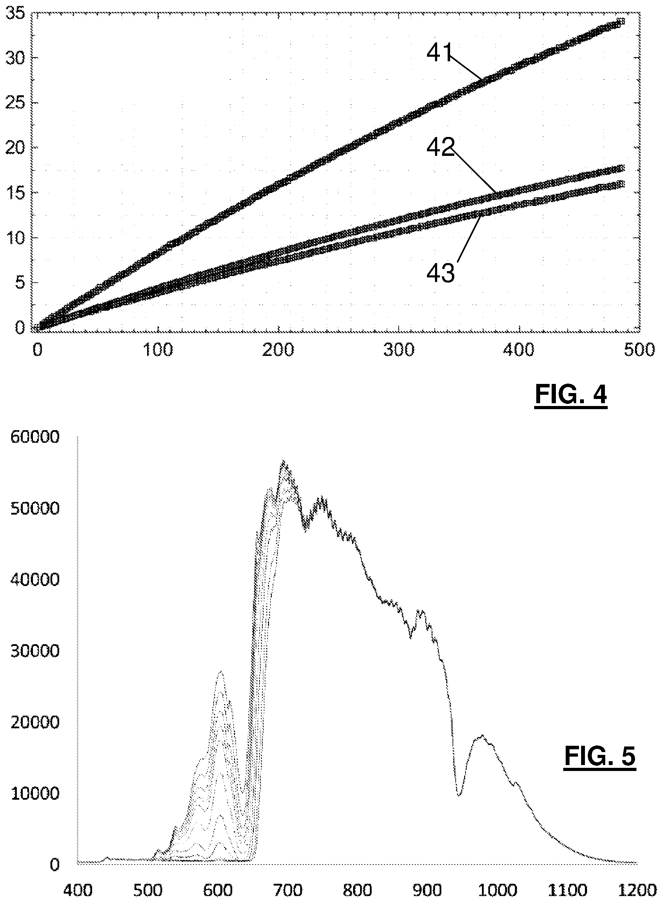

Figure 4 shows an example of a calibration graph obtained by evaluating the absorbance area within three wavelength ranges: [535-670 nm] (curve 41), [604-660 nm] (curve 42) and [535-604 nm] (curve 43). The best fitting of the experimental points is represented by polynomial curves.

For example, Gafchromic® EBT3 films may be exposed to gamma radiation coming from a radioactive source of $^{60}$Co for two different dose rates (130 mGy/min and 3,300 mGy/min).

Figure 5 shows the output curves of the measurement instrument concerning the irradiation of a Gafchromic® EBT3 radio-chromic film exposed to gamma radiation coming from a source of $^{60}$Co with doses up to 22 Gy. The X-axis indicates the wavelengths, and the Y-axis indicates the counts.

The dose rate in the position of the film is 3,300 mGy/min. In order to reduce the integration time, supplementary scattering material is conveniently present in this type of film. For example, Teflon may be used, with an integration time of the measurement instrument set to 1.3 seconds. Also in this case, the observed spectra are very similar to those shown in Figure 2, and the same considerations previously made for the Gafchromic® XRQA2 film still apply.

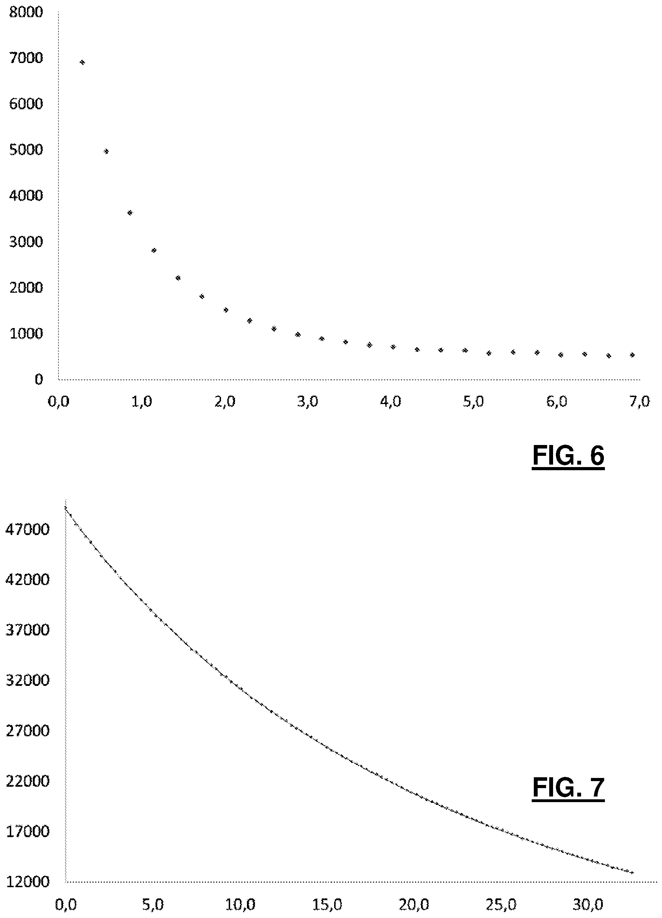

Figure 6 shows a calibration obtained by evaluating the counts at the 635nm wavelength. The X-axis indicates the dose in Gy, and the Y-axis indicates the counts. The integration time was set to 1.3 sec. No detectable variation in the counts (saturation) is observed beyond 5 Gy.

On the contrary, this observable is very sensitive at doses smaller than 2 Gy. Looking at the spectrum of Figure 5, it can be noticed that calibration can be carried out with wavelength values that allow exploring higher dose ranges.

Figure 7 shows a calibration obtained by evaluating the counts at the 663nm wavelength. The X-axis indicates the dose in Gy, and the Y-axis indicates the counts. The integration time was set to 1.3 sec. The polynomial curve represents the best fitting of the experimental data, represented by the following polynomial equation:

$$y = -0.0004x^5 + 0.049x^4 - 2.447x^3 + 82.459x^2 - 2403.4x + 48994$$

$$R^2 = 1$$

The explorable dynamic range is broader in this case. In fact, significant variations are observed up to 30 Gy.

The value of the coefficient $R^2=1$ shows a perfect fitting of the experimental data at the fifth order polynomial. Comparing the calibration graphs of Figure 7 with those of Figure 6, it can be observed that, when calibration is made by recording the counts at the 663nm wavelength, higher sensitivity at high doses is achieved, while inevitably losing sensitivity at low doses.

It is clear that the choice of the spectral observable which best represents the chromatic alteration undergone by the radio-chromic film because of its exposure to ionizing radiations will depend on the dose range to be investigated. With the developed method, one can select observables that allow extending the film dynamics by several orders of magnitude.

In order to demonstrate this assertion, a Gafchromic® EBT3 film was exposed to gamma radiation coming from a source of $^{60}$Co at a dose rate of 130 mGy/min. Aiming at studying low doses (of the order of one mGy) with an EBT3-type film (declared by the manufacturer to be sensitive within the 1cGy-40Gy range), a sheet of aluminized Mylar a few micrometers thick was used as a scattering material, such as to obtain an integration time of 250 msec.

Figure 8 shows a calibration obtained by evaluating the counts at the 635nm wavelength. The X-axis indicates the dose in Gy, and the Y-axis indicates the counts. The integration time was set to 250 msec. The polynomial curve represents the best fitting of the experimental data. The figure also shows a magnification of the [0 - 100 mGy] range.

At present, this dose range is not detectable through known technologies for reading Gafchromic® EBT3 radio-chromic films, such as optical scanners and densitometers. Therefore, the system of the invention provides the advantage that it can be used for all radio-chromic films and allows, for some of them, extending the dynamics by several orders of magnitude.

The extreme versatility of the instrument for reading radio-chromic films in real time is mainly due to the possibility of selecting different backscattering materials and to the possibility of carrying out the reading by using different analytical methods. The choice of the backscattering material mostly affects the integration time of the spectrometer, and hence the irradiated dose rate that can be investigated, and ultimately the particular dosimetric application. Likewise, the choice of the observable to be used during the data analysis for calibration purposes mostly affects the measurement error. Depending on the dosimetric application, the choice of the observable for data analysis is also an element of crucial importance, which must therefore be determined on a case-by-case basis.

As regards the advantages provided by the present invention, the following can be stated.

The developed method allows for in-line dosimetric measurements (during the irradiation) as well as radiation dose monitoring from a remote location.

In-line reading allows radio-chromic films to be used until they reach their sensitivity saturation condition (i.e. multiple exposures and readings per film).

Remote monitoring allows using radio-chromic films even in areas where the film is no longer accessible after the initial positioning.

The extremely small film size required (much less than one square millimeter) results in optimized use of this material, leading to a significant reduction of the measurement costs.

The traditional method for reading radio-chromic films makes use of commercial optical scanners and densitometers. Therefore, they can only be read during off-line analyses, after having been removed from the radiation zone. In light of this, the development of a real-time reading method controllable from a remote location leads to considerable advantages in several fields of the physics of radiations.

By using the calibrations of the radio-chromic films available on the market, it is possible to use the developed system as a dosimeter for in-line measurements. The extreme versatility of the method is due to film interchangeability. This allows detecting the radiation for a broad range of absorbed dose (sensitivity range of commercially available radio-chromic films): from a few cGy to hundreds of kGy.

By way of example, the following industrial applications can be conceived for the present invention.

The newly developed method for reading radio-chromic films in real time, which can be monitored from a remote location, finds application in all fields of physics of radiations. In particular:

- Dosimetry of environmental radiation levels.
- Monitoring of radioactive levels in dumping grounds, depots for special materials, water purification systems.
- Medical physics: monitoring of the dose administered to the patient or to equivalent-tissue dummies in radiotherapy or adrotherapy treatments.

- Monitoring of the dose absorbed from food for sterilization treatments.
- Diagnostics of particle beams.
- Monitoring of radiation levels in inaccessible test areas (nuclear reactors, irradiation facilities).

The use of fibers makes it possible to decouple the place where the operator is working from the place where the radiation measurement is being taken, thus also improving the safety of the measurement system; the system allows measuring the time progression, and not only the final result as an integral of total absorption. Fiber has a very low coefficient of attenuation, and therefore long distances can be reached, also with reference to the signal-to-noise ratio.

The system of the invention provides a valid reading also below the minimum dose declared by the film manufacturer, thus demonstrating that many radio-chromic films can be used at a wider dose range, resulting in a broader range of application thereof. It follows that the system can potentially be used, for example, also for environmental measurements.

The integration time is to be understood as the reference measurement time, which can be modified (typically decreased) according to the selected material, so as to be able to "see" and measure a dose and change the measurement speed (the integration time decreases). It is thus possible to determine the type of backscattering material on the basis of the desired response speed and frequency response type.

## Claims

1. System for real-time determination of characteristics of radio-chromic films, **characterized in that** it comprises:

- one or more transmission optical fibers (2), adapted to transport an optical signal emitted by a light source (1) located at one end of said one or more transmission optical fibers (2);
- one or more collection optical fibers (4), adapted to transport the optical signal towards a measuring and processing system (5, 6) for measuring and processing said optical signal, located at one end of said one or more collection optical fibers (4);
- an optical coupler (7) adapted to couple said one or more transmission optical fibers (2) and said one or more collection optical fibers (4) in an optical cable (8);
- an optical backscattering/reflection system (10) adapted to:

- house one end of said optical cable (8) opposite to that of said light source (1) and measuring and processing system (5, 6);
- house a radio-chromic film (3) of the type sensitive to ionizing radiations, so that it is hit by an optical signal transported by said one or more transmission optical fibers (2) and emits an optical signal towards said one or more collection optical fibers (4);
- receive ionizing radiation (11) and convey it onto the area of said radio-chromic film (3) hit by said optical signal, simultaneously with said optical signal emission. wherein said backscattering/reflection system (10) comprises a perforated structure comprising in succession:

- a first part (20) adapted to house said end of the optical cable (8);
- a slot (21) adapted to house said radio-chromic film (3) ;
- a second part (22) adapted to house a scattering material (23) ;
- a closing terminal part (25) perforated at its center, allowing said ionizing radiation (11) to enter and hit said radio-chromic film (3).

2. System according to claim 1, wherein said one or more transmission optical fibers (2) and one or more collection optical fibers (4) are adapted to transport an optical signal at wavelengths in the range of 400 to 1,100 nm.

3. System according to claim 1, wherein said radio-chromic film (3) is of the single-layer or double-layer type and is made from microcrystalline organic monomers on a fine polyester base with transparent or opaque coating, and said ionizing radiation is of the alpha and/or beta and/or gamma type.

4. System according to claim 1, wherein said scattering material (23) comprises plastic sheets made of ABS or Teflon and/or sheets made of aluminized Mylar.

5. System according to claim 1, wherein said slot (21) is adapted to house said radio-chromic film (3) so that the latter can be slidably positioned by means of a sliding system (15).

6. Method for real-time determination of characteristics of radio-chromic films, using the system for real-time determination of characteristics of radio-chromic films according to any one of the preceding claims, comprising the steps of:

- activating said light source (1);
- activating said measuring and processing system (5, 6);
- activating an emitter of said ionizing radiation (11);
- through said measuring and processing system (5, 6), measuring the optical signal reflected by said radio-chromic film (3).

## Patentansprüche

1. System für die Echtzeit-Bestimmung von Eigenschaften radiochromer Filme, **dadurch gekennzeichnet, dass** es umfasst:

- eine oder mehrere optische Übertragungsfasern (2), die dazu geeignet sind, ein optisches Signal zu transportieren, das von einer Lichtquelle (1) emittiert wird, die sich an einem Ende der einen oder der mehreren optischen Übertragungsfasern (2) befindet;
- eine oder mehrere optische Sammelfasern (4), die dazu geeignet sind, das optische Signal zu einem Mess- und Verarbeitungssystem (5, 6), das sich an einem Ende der einen oder der mehreren optischen Sammelfasern (4) befindet, zu transportieren, um das optische Signal zu messen und zu verarbeiten;
- eine optische Kopplungsvorrichtung (7), die dazu geeignet ist, die eine oder die mehreren optischen Übertragungsfasern (2) und die eine oder die mehreren optischen Sammelfasern (4) in einem optischen Kabel (8) zu koppeln;
- ein optisches Rückstreuungs-/Reflexionssystem (10), das dazu geeignet ist:

   - ein Ende des optischen Kabels (8), das jenem der Lichtquelle (1) und des Mess- und Verarbeitungssystems (5, 6) gegenüberliegt, aufzunehmen;
   - einen radiochromen Film (3) von dem Typ, der für ionisierende Strahlungen empfindlich ist, aufzunehmen, so dass er von einem optischen Signal getroffen wird, das durch die eine oder die mehreren optischen Übertragungsfasern (2) transportiert wird, und ein optisches Signal zu der einen oder den mehreren optischen Sammelfasern (4) hin emittiert;
   - ionisierende Strahlung (11) aufzunehmen und sie auf den Flächenbereich des radiochromen Films (3), der von dem optischen Signal getroffen wird, gleichzeitig mit der optischen Signalemission zu leiten, wobei das Rückstreuungs-/Reflexionssystem (10) eine perforierte Struktur umfasst, die der Reihe nach umfasst:

      - einen ersten Teil (20), der dazu geeignet ist, das Ende des optischen Kabels (8) aufzunehmen;
      - einen Schlitz (21), der dazu geeignet ist, den radiochromen Film (3) aufzunehmen;
      - einen zweiten Teil (22), der dazu geeignet ist, ein rückstreuendes Material (23) aufzunehmen;
      - einen Endverschlussteil (25), der in seinem Zentrum perforiert ist, was der ionisierenden Strahlung (11) erlaubt, einzutreten und auf den radiochromen Film (3) zu treffen.

2. System nach Anspruch 1, wobei die eine oder die mehreren optischen Übertragungsfasern (2) und die eine oder die mehreren optischen Sammelfasern (4) dazu geeignet sind, ein optisches Signal mit Wellenlängen in dem Bereich von 400 bis 1.100 nm zu transportieren.

3. System nach Anspruch 1, wobei der radiochrome Film (3) von dem Einzelschicht- oder Doppelschicht-Typ ist und aus mikrokristallinen organischen Monomeren auf einer Feinpolyesterbasis mit transparenter oder opaker Beschichtung ist, und die ionisierende Strahlung von dem Alpha- und/oder Beta- und/oder Gamma-Typ ist.

4. System nach Anspruch 1, wobei das rückstreuende Material (23) Kunststoffflächenmaterial aus ABS oder Teflon und/oder Flächenmaterial umfasst, das aus aluminisiertem Mylar hergestellt ist.

5. System nach Anspruch 1, wobei der Schlitz (21) dazu geeignet ist, den radiochromen Film (3) so aufzunehmen, dass letzterer mittels eines Verschiebesystems (15) verschiebbar positioniert werden kann.

6. Verfahren für die Echtzeit-Bestimmung von Eigenschaften radiochromer Filme unter Verwendung des Systems für die Echtzeit-Bestimmung von Eigenschaften radiochromer Filme nach einem der vorhergehenden Ansprüche, umfassend die Schritte:

   - Aktivieren der Lichtquelle (1);
   - Aktivieren des Mess- und Verarbeitungssystems (5, 6);
   - Aktivieren eines Emitters der ionisierenden Strahlung (11) ;
   - Messen des optischen Signals, das von dem radiochromen Film (3) reflektiert wird, durch das Mess- und Verarbeitungssystem (5, 6).

**Revendications**

1. Système de détermination en temps réel de caractéristiques de films radio-chromiques, **caractérisé en ce qu'**il comprend :

   - une ou plusieurs fibres optiques de transmission (2), adaptées pour transporter un signal optique émis par une source de lumière (1) située à une extrémité desdites une ou plusieurs fibres optiques de transmission (2) ;
   - une ou plusieurs fibres optiques de collecte (4), adaptées pour transporter le signal optique vers un système de mesure et de traitement (5, 6) pour mesurer et traiter ledit signal optique, situé à une extrémité desdites une ou plusieurs fibres optiques de collecte (4) ;

- un coupleur optique (7) adapté pour coupler lesdites une ou plusieurs fibres optiques de transmission (2) et lesdites une ou plusieurs fibres optiques de collecte (4) dans un câble optique (8) ;
- un système de rétrodiffusion/réflexion optique (10) adapté pour :

  - accueillir une extrémité dudit câble optique (8) opposée à celle de ladite source de lumière (1) et dudit système de mesure et de traitement (5, 6);
  - accueillir un film radio-chromique (3) du type sensible aux rayonnements ionisants, de façon qu'il soit frappé par un signal optique transporté par lesdites une ou plusieurs fibres optiques de transmission (2) et émette un signal optique vers lesdites une ou plusieurs fibres optiques de collecte (4) ;
  - recevoir un rayonnement ionisant (11) et l'acheminer sur la zone dudit film radio-chromique (3) frappé par ledit signal optique, simultanément à ladite émission de signal optique.

dans lequel ledit système de rétrodiffusion/réflexion optique (10) comprend successivement :

  - une première partie (20) adaptée pour accueillir ladite extrémité du câble optique (8) ;
  - une fente (21) adaptée pour accueillir ledit film radio-chromique (3) ;
  - une seconde partie (22) adaptée pour accueillir un matériau diffusant (23) ;
  - une partie terminale de fermeture (25) perforée en son centre, permettant audit rayonnement ionisant (11) d'entrer et de frapper ledit film radio-chromique (3).

2. Système selon la revendication 1, dans lequel lesdites une ou plusieurs fibres optiques de transmission (2) et une ou plusieurs fibres optiques de collecte (4) sont adaptées pour transporter un signal optique à des longueurs d'onde dans la plage de 400 à 1100 nm.

3. Système selon la revendication 1, dans lequel ledit film radio-chromique (3) est du type monocouche ou bicouche et est fait à partir de monomères organiques microcristallins sur une fine base de polyester avec un revêtement transparent ou opaque, et ledit rayonnement ionisant est de type alpha et/ou bêta et/ou gamma.

4. Système selon la revendication 1, dans lequel ledit matériau diffusant (23) comprend des feuilles de plastique faites d'ABS ou de Téflon et/ou des feuilles faites de Mylar aluminisé.

5. Système selon la revendication 1, dans lequel ladite fente (21) est adaptée pour accueillir ledit film radio-chromique (3) de façon que ce dernier puisse être positionné de manière coulissante au moyen d'un système de coulissement (15).

6. Procédé de détermination en temps réel de caractéristiques de films radio-chromiques, utilisant le système de détermination en temps réel de caractéristiques de films radio-chromiques selon l'une quelconque des revendications précédentes, comprenant les étapes suivantes :

  - l'activation de ladite source de lumière (1) ;
  - l'activation dudit système de mesure et de traitement (5, 6);
  - l'activation d'un émetteur dudit rayonnement ionisant (11) ;
  - au moyen dudit système de mesure et de traitement (5, 6), la mesure du signal optique réfléchi par ledit film radio-chromique (3).

**FIG. 1**

**FIG. 2**

**FIG. 3**

FIG. 4

FIG. 5

**FIG. 6**

**FIG. 7**

**FIG. 8**

**FIG. 9**

**FIG. 10**

## REFERENCES CITED IN THE DESCRIPTION

**Non-patent literature cited in the description**

- **CROTEAU ANDRE et al.** Real-time optical fiber dosimeter probe. *OPTICAL FIBERS, SENSORS, AND DEVICES FOR BIOMEDICAL DIAGNOSTICS AND TREATMENT XI, SPIE, 1000 20TH ST. BELLINGHAM WA 98225-6705 USA,* 10 February 2011, vol. 7894 (1), 1-7

- **SLOBODAN DEVIC et al.** Reference radio-chromic film dosimetry: Review of technical aspects. Elsevier Ltd., Physica Medica, 2016, vol. 32, 541-556